(19) **Europäisches Patentamt European Patent Office Office européen des brevets**

(11) **EP 1 553 644 B1**

(12) **EUROPEAN PATENT SPECIFICATION**

(45) Date of publication and mention
of the grant of the patent:
**22.04.2009 Bulletin 2009/17**

(51) Int Cl.:
*H01M 2/16* (2006.01)     *H01G 9/02* (2006.01)

(21) Application number: **03761823.8**

(86) International application number:
**PCT/JP2003/008165**

(22) Date of filing: **27.06.2003**

(87) International publication number:
**WO 2004/004029 (08.01.2004 Gazette 2004/02)**

(54) **COATING SEPARATOR, PROCESS FOR PRODUCING THE SAME AND ELECTRICAL AND ELECTRONIC PARTS INCLUDING THE SEPARATOR**

SEPARATOR MIT BESCHICHTUNG, VERFAHREN ZU SEINER HERSTELLUNG UND MIT DEM SEPARATOR VERSEHENE ELEKTRISCHE UND ELEKTRONISCHE TEILE

SEPARATEUR A REVETEMENT, PROCEDE DE PRODUCTION DE CE DERNIER ET COMPOSANTS ELECTRIQUES ET ELECTRONIQUES COMPRENANT CE SEPARATEUR

(84) Designated Contracting States:
**AT BE BG CH CY CZ DE DK EE ES FI FR GB GR HU IE IT LI LU MC NL PT RO SE SI SK TR**

(30) Priority: **28.06.2002 JP 2002189696**

(43) Date of publication of application:
**13.07.2005 Bulletin 2005/28**

(73) Proprietor: **Dupont Teijin Advanced Papers Ltd. Tokyo 100-6111 (JP)**

(72) Inventor: **Naruse, Shinji,
Dupont Teijin Advanced Papers, Ltd
Chiyoda-ku, Tokyo 100-6111 (JP)**

(74) Representative: **Matthews, Derek Peter
Frank B. Dehn & Co.
St Bride's House
10 Salisbury Square
London
EC4Y 8JD (GB)**

(56) References cited:
| | |
|---|---|
| EP-A2- 1 168 469 | JP-A- 6 231 744 |
| JP-A- 7 326 371 | JP-A- 8 250 101 |
| JP-A- 9 208 736 | JP-A- 10 154 500 |
| JP-A- 62 254 359 | JP-A- 2001 040 597 |
| JP-A- 2001 283 810 | JP-A- 2001 325 965 |
| JP-A- 2001 357 890 | JP-A- 2002 313 305 |

EP 1 553 644 B1

**Description**

**Technical Field**

This invention relates to a coated separator, process for the production of the same, and electrical and electronic parts in which the same is used.

**Background Art**

As is symbolized by the recent progress of portable communication equipments, high-speed processors and the like, it is remarkable that electronic equipments have now smaller size and less weight and give higher performance than before. One of elementary techniques that contribute to this tendency is the improvement of electrical and electronic parts in performance. Batteries are no exception; high-performance parts for batteries are being rapidly developed. There is accordingly a growing demand for the development of technology and quality of members, e.g., separator as an interstructure.

For instance, as a variation of alkaline batteries, a cylindrically shaped one is known. This cylindrical alkaline battery is manufactured by winding a separator onto a group of grids. In order to increase battery capacity or to reduce electric resistance, non-woven fabric which is used as a separator needs to have a good electrolyte retention. For this purpose, a separator is preferably composed of fibers which have as small a diameter as possible. In one of known methods to produce such non-woven fabric, water stream is sprayed on a fiber web which contains divisible fibers which comprise polyolefin resin and are divisible with water stream, by which to divide the divisible fibers and thereby produce fibers having a small diameter. This method has a problem that divisible fibers cannot be divided sufficiently, or that a large amount of energy is required so that fibers may be fully divided.

Another method of preparing a separator is disclosed in EP-A-1168 469 and includes melt kneading, molding and stretching of a high molecular weight polyolefin.

The objective of this invention is to overcome the above-mentioned problem, i.e., to provide a separator which has a good electrolyte retention.

**Disclosure of Invention**

In consideration of the above-mentioned situation, the inventors of this invention have made assiduous study with a view to developing a separator which has a high-level electrolyte retention, and, thus, accomplished this invention.

This invention provides a process for the manufacture of a separator for electrical and electronic parts, characterised in that an uncoated separator made from aramid, in the form of paper, non-woven fabric, fine porous film or a composite thereof, is coated with at least one substance selected from calcium carbonate, calcium chloride, anhydrous calcium chloride, calcium oxide, sodium chloride, sodium sulfate, anhydrous sodium sulfate, sodium sulfite, copper sulfate anhydrous copper sulfate, aluminium sulfate, sodium carboxymethylcellulose, silica gel, silica sol, silica, zeolite, alcohols, glycols and polysaccharides, wherein the separator being subject to heat treatment before and/or after coating.

In the following, the capacitor, a process to manufacture the same, and the use of said capacitor are explained in more detail.

(Separator)

In this invention, "separator" is defined as a structure to separate conductive members, e.g., electrodes, from each other in electrical and electronic parts such as battery and capacitor, for the purpose of preventing short circuit. Separator is employed in the form of paper, non-woven fabric, fine porous film or a composite thereof. As a material for separator, this invention uses aramid

(Coated separator)

In this invention, "coated separator" means a separator whose surface has, adhered thereon, at least one substance selected from the ionic substances, hydroxyl group containing substances and silicon compounds listed below. There is no particular restriction on the amount of said substance adhered, to the extent that pores of separator are not substantially clogged. Generally, however, said amount preferably falls within a range of 0.004-20 %, !in particular 0.01-15 %, in dry weight, based on the weight of uncoated separator. Although uniform coating is desirable, uneven coating causes no problem if only separator functions as such.

There is no restriction on coating methods. In a suitable method, at least one of the above-mentioned substances is dissolved or dispersed in water; subsequently, a separator is soaked in the resultant solution or dispersion; and then, said separator is dried so that moisture may be evaporated. Integration into an electrical or electronic part is then possible. In another method, an uncoated separator is previously integrated with a part before soaked; subsequently, thus assembled whole part is soaked in solution or dispersion; and then, said whole part is dried so that moisture may be evaporated. The condition of the above-mentioned drying is not particularly restricted. Usually, however, drying is preferably conducted at a temperature of 50°C or higher for one minute or more.

The above-mentioned "part" means an electrical and electronic part such as battery and capacitor. Such parts include both finished articles and semi-finished ones so long as they have a spiace permeative with the above-mentioned solution.

(Ionic substances)

"Ionic substances" which are used in this invention mean calcium carbonate, calcium chloride, anhydrous calcium chloride, calcium oxide, sodium chloride, sodium sulfate, anhydrous sodium sulfate, sodium sulfite, copper sulfate, anhydrous copper sulfate, aluminum sulfate and sodium carboxymethylcellulose. Among these, sodium sulfate and anhydrous sodium sulfate are preferable.

(Hydroxyl group-containing substances)

"Hydroxyl group-containing substances" which are used in this invention mean glycols (e.g., ethylene glycol, propylene glycol, etc.) and polysaccharides (e.g., cellulose, starch, etc.). Among these, polysaccharides are especially preferable.

(Silicon compounds)

"Silicon compounds" which are used in this invention mean silica gel, silica sol, silica and zeolite, among which silica is especially preferable.

(Heat treatment)

In this invention, under circumstances, separator is subjected to heat treatment before and/or after coated, for the purpose of further improvement of electrolyte retention. In particular when a heat treatment is conducted after coating, ionic substance, hydroxyl group-containing substance or silicon compound or the like is fixed on separator with the result that electrolyte retention may possibly be remarkably enhanced. There is no strict restriction on temperature of said heat treatment. Generally, however, the temperature is preferably between 100°C and the melting point of separator-constituting material. Heat treatment may usually be carried out for 1 to 60 minutes.

(Electrolyte retention)

In this invention, " electrolyte retention" means the extent to which a separator sucks up a liquid such as electrolyte within a certain period of time. Concretely, it is defined as a value which is calculated according to the following formula (1):

$$h^2\eta/\gamma t \qquad (1)$$

wherein h denotes the height (mm) to which a liquid is sucked up within a period of t seconds; $\eta$ denotes the viscosity (mP a S) of said liquid; $\gamma$ denotes the surface tension (mN/m) of said liquid; and t denotes sucking time (second).

Generally, the electrolyte retention of the coated separator of this invention as shown by the above-mentioned formula (1) is preferably 0.7 $\mu$m or more, especially 1 $\mu$m or more.

The separator of this invention which has been coated in the afore-mentioned manner has a good electrolyte retention owing to coating, and is quite suitable as a separator panel between conductive members of electrical and electronic parts.

Examples

In the following, this invention is explained in more detail by Example and Comparative Example.

(Method for measurement)

(1) Measurement of the basis weight and the thickness of sheet: Measured according to JIS C2111.
(2) Measurement of sucking height:

The height to which n-butanol was sucked up within a period of 30 seconds was measured.
At 20°C, n-butanol had a viscosity of 7 (mP a S) and a surface tension of 24.6 (mN/m).

Example 1

Fibrid of polymetaphenylene isophthalamide was manufactured with a wet type precipitator as mentioned in Japanese Patent Publication No. Sho 52 (1977)-151624. Thus obtained fibrid was treated with a refiner so that drainage rate (Canadian standard freeness) might become 20 ml.
Aramid fiber (Conex®, manufactured by Teijin Limited) was cut to a length of 5 mm to serve as paper stock (aramid flock). This flock had a fineness of 0.8 denier.
Thus prepared stock was mixed with each other in water, and was then made into sheet with TAPPI standard sheet machine (surface area: 625 cm$^2$).
Said sheet was subjected to calendering process with a calendering machine at a roll temperature of 330°C, a roll linear pressure of 100 kgf/cm, and at a rate of 2 m/min.
Thus calender-processed sheet was soaked in a 0.25 % aqueous solution of sodium sulfate for one minute, and was then dried in a hot air oven at 150°C for 30 minutes.
Thus obtained sheet material was measured for main properties and butanol-sucking height. Results are shown in Table 1.

Comparative Example 1

The steps of Example 1 were repeated up to calendering process, and, then, thus processed sheet was soaked in high purity water for one minute, and was then dried in a hot air oven at 150°C for 30 minutes.
Thus obtained sheet material was measured for main properties and butanol-sucking height. Results are shown in Table 1.

Table 1

| Properties | Unit | Example 1 | Comparative Example 1 |
|---|---|---|---|
| Composition of material<br>    Aramid fibrid<br>    Aramid flock | Weight % | 10<br>90 | 10<br>90 |
| Basis weight | g/m$^2$ | 10 | 10 |
| Thickness | mm | 0.04 | 0.04 |
| Density | g/cm$^3$ | 0.25 | 0.25 |
| Sucking height | mm | 13 | 8 |
| Liquid retention h$^2\eta/\gamma$t | $\mu$m | 1.6 | 0.6 |

As is seen in the above Table 1, liquid retention is improved when separator is coated in accordance with this invention.
As explained above, a separator which has been coated in accordance with this invention improves in electrolyte retention. When used in electrical and electronic parts, a coated separator of this invention is expected to help said parts to show their original electrical properties without such loss as caused by the insufficient retention or leak of electrolyte.

**Claims**

1. A process for the manufacture of a separator for electrical and electronic parts, **characterised in that** an uncoated separator made from aramid, in the form of paper, non-woven fabric, fine porous film or a composite thereof, is coated with at least one substance selected from calcium carbonate, calcium chloride, anhydrous calcium chloride, calcium oxide, sodium chloride, sodium sulfate, anhydrous sodium sulfate, sodium sulfite, copper sulfate, anhydrous copper sulfate, aluminium sulfate, sodium carboxymethylcellulose, silica gel, silica sol, silica, zeolite, alcohols, glycols and polysaccharides, wherein the separator is subjected to heat treatment before and/or after coating.

2. A process according to claim 1 wherein the coated separator has a sucking height in a range as shown by the following inequality (2):

$$0.7 < h^2\eta/\gamma t \qquad (2)$$

   wherein h denotes the height (mm) to which a liquid is sucked up within a period of t seconds; $\eta$ denotes the viscosity (mP a S) of said liquid; $\gamma$ denotes the surface tension (mN/m) of said liquid; and t denotes sucking time (second).

3. A process according to claim 1 **characterized in that** at least one substance selected from calcium carbonate, calcium chloride, anhydrous calcium chloride, calcium oxide, sodium chloride, sodium sulfate, anhydrous sodium sulfate, sodium sulfite, copper sulfate, anhydrous copper sulfate, aluminium sulfate, sodium carboxymethylcellulose, silica gel, silica sol, silica, zeolite, alcohols, glycols and polysaccharides, is previously dissolved or dispersed in watery that an uncoated separator is soaked in the resultant solution or dispersion; and that, then, said separator is dried so that moisture may be evaporated; wherein the separator is subjected to heat treatment before and/or after coating.

4. A process according to claim 1 **characterised in that** an uncoated separator is previously integrated with a part selected from electrical and electronic parts before soaking in a solution of at least one substance selected from calcium carbonate, calcium chloride, anhydrous calcium chloride, calcium oxide, sodium chloride, sodium sulfate, anhydrous sodium sulfate, sodium sulfite, copper sulfate, anhydrous copper sulfate, aluminium sulfate, sodium carboxymethylcellulose, silica gel, silica sol, silica, zeolite, alcohols, glycols and polysaccharides in water; that the thus assembled whole part is soaked in the solution; and that, then, said whole part is dried so that moisture may be evaporated; wherein the separator is subjected to heat treatment before and/or after coating.

5. A process according to any one of claims 1 to 3 further comprising integrating said coated separator into electrical and electronic parts.

**Patentansprüche**

1. Verfahren zur Herstellung eines Separators für elektrische und elektronische Teile, **dadurch gekennzeichnet, dass** man einen unbeschichteten Separator aus Aramid in Form von Papier, eines Vlieses, feinen porösen Films oder einem Verbundmaterial davon, mit wenigstens einer Substanz beschichtet, die unter Calciumcarbonat, Calciumchlorid, wasserfreiem Calciumchlorid, Calciumoxid, Natriumchlorid, Natriumsulfat, wasserfreiem Natriumsulfat, Natriumsulfit, Kupfersulfat, wasserfreiem Kupfersulfat, Aluminiumsulfat, Natriumcarboxymethylcellulose, Kieselgel, Kieselsol, Kieselsäure, Zeolith, Alkoholen, Glykolen und Polysacchariden ausgewählt ist, wobei man den Separator vor und/oder nach der Beschichtung einer Wärmebehandlung unterzieht.

2. Verfahren nach Anspruch 1, wobei der beschichtete Separator eine Saughöhe im durch die folgende Ungleichung (2) gezeigten Bereich aufweist:

$$0{,}7 < h^2\eta/\gamma t \qquad (2)$$

   worin h für die Höhe (mm) steht, zu der eine Flüssigkeit innerhalb einer Spanne von t Sekunden aufgesaugt wird; $\eta$ für die Viskosität (mP a S) der Flüssigkeit steht; $\gamma$ für die Oberflächenspannung (mN/m) der Flüssigkeit steht; und t für die Saugzeit (Sekunden) steht.

3. Verfahren nach Anspruch 1, **dadurch gekennzeichnet, dass** man wenigstens eine Substanz, die unter Calciumcarbonat, Calciumchlorid, wasserfreiem Calciumchlorid, Calciumoxid, Natriumchlorid, Natriumsulfat, wasserfreiem Natriumsulfat, Natriumsulfit, Kupfersulfat, wasserfreiem Kupfersulfat, Aluminiumsulfat, Natriumcarboxymethylcellulose, Kieselgel, Kieselsol, Kieselsäure, Zeolith, Alkoholen, Glykolen und Polysacchariden ausgewählt ist, zuvor in Wasser auflöst oder dispergiert; einen unbeschichteten Separator in die erhaltene Lösung oder Dispersion eintaucht und den Separator dann trocknet, so dass die Feuchtigkeit abdampfen kann, wobei man den Separator vor und/oder nach dem Beschichten einer Wärmebehandlung unterzieht.

4. Verfahren nach Anspruch 1, **dadurch gekennzeichnet, dass** ein unbeschichteter Separator zuvor mit einem unter elektrischen und elektronischen Teilen ausgewählten Teil integriert wird, bevor man ihn in eine Lösung wenigstens einer Substanz eintaucht, die unter Calciumcarbonat, Calciumchlorid, wasserfreiem Calciumchlorid, Calciumoxid, Natriumchlorid, Natriumsulfat, wasserfreiem Natriumsulfat, Natriumsulfit, Kupfersulfat, wasserfreiem Kupfersulfat, Aluminiumsulfat, Natriumcarboxymethylcellulose, Kieselgel, Kieselsol, Kieselsäure, Zeolith, Alkoholen, Glykolen und Polysacchariden ausgewählt ist, und das derart zusammengefügte ganze Teil in die Lösung eintaucht; und das ganze Teil dann trocknet, so dass die Feuchtigkeit abdampfen kann, wobei man den Separator vor und/oder nach dem Beschichten einer Wärmebehandlung unterzieht.

5. Verfahren nach einem der Ansprüche 1 bis 3, bei dem man außerdem den beschichteten Separator in elektrische und elektronische Teile integriert.

## Revendications

1. Procédé pour la fabrication d'un séparateur pour des pièces électriques et électroniques, **caractérisé en ce qu'**un séparateur non revêtu fait d'un aramide, sous la forme de papier, de non tissé, de film poreux fin ou d'un composite de ceux-ci, est revêtu avec au moins une substance choisie parmi le carbonate de calcium, le chlorure de calcium, le chlorure de calcium anhydre, l'oxyde de calcium, le chlorure de sodium, le sulfate de sodium, le sulfate de sodium anhydre, le sulfite de sodium, le sulfate de cuivre, le sulfate de cuivre anhydre, le sulfate d'aluminium, la carboxyméthylcellulose sodique, un gel de silice, un sol de silice, une silice, une zéolite, les alcools, les glycols et les polysaccharides, dans lequel le séparateur est soumis à un traitement thermique avant et/ou après le revêtement.

2. Procédé selon la revendication 1, dans lequel le séparateur revêtu a une hauteur d'aspiration dans une gamme telle que représentée par l'inégalité (2) suivante :

$$0,7 < h^2\eta/\gamma t \quad (2)$$

dans laquelle h représente la hauteur (mm) à laquelle un liquide est aspiré en l'espace d'une durée de t secondes ; $\eta$ représente la viscosité (mPa.s) dudit liquide ; $\gamma$ représente la tension superficielle (mN/m) dudit liquide ; et t représente le temps d'aspiration (secondes).

3. Procédé selon la revendication 1, **caractérisé en ce qu'**au moins une substance choisie parmi le carbonate de calcium, le chlorure de calcium, le chlorure de calcium anhydre, l'oxyde de calcium, le chlorure de sodium, le sulfate de sodium, le sulfate de sodium anhydre, le sulfite de sodium, le sulfate de cuivre, le sulfate de cuivre anhydre, le sulfate d'aluminium, la carboxyméthylcellulose sodique, un gel de silice, un sol de silice, une silice, une zéolite, les alcools, les glycols et les polysaccharides, est préalablement dissoute ou dispersée dans de l'eau ; **en ce qu'**un séparateur non revêtu est immergé dans la solution ou dispersion obtenue ; et **en ce que**, ensuite, ledit séparateur est séché de sorte que l'humidité peut être évaporée ; dans lequel le séparateur est soumis à un traitement thermique avant et/ou après le revêtement.

4. Procédé selon la revendication 1, **caractérisé en ce qu'**un séparateur non revêtu est préalablement intégré avec une pièce choisie parmi les pièces électriques et électroniques avant l'immersion dans une solution d'au moins une substance choisie parmi le carbonate de calcium, le chlorure de calcium, le chlorure de calcium anhydre, l'oxyde de calcium, le chlorure de sodium, le sulfate de sodium, le sulfate de sodium anhydre, le sulfite de sodium, le sulfate de cuivre, le sulfate de cuivre anhydre, le sulfate d'aluminium, la carboxyméthylcellulose sodique, un gel de silice, un sol de silice, une silice, une zéolite, les alcools, les glycols et les polysaccharides dans de l'eau ; **en ce que** la pièce entière ainsi assemblée est immergée dans la solution ; et **en ce que**, ensuite, ladite pièce entière est séchée de sorte que l'humidité peut être évaporée ; dans lequel le séparateur est soumis à un traitement thermique avant et/ou après le revêtement.

5. Procédé selon l'une quelconque des revendications 1 à 3, comprenant en outre l'intégration dudit séparateur revêtu dans des pièces électriques et électroniques.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1168469 A

- JP SHO521977151624 B